Europäisches Patentamt

European Patent Office

Office européen des brevets

(11) Veröffentlichungsnummer: **0 196 493**
**A2**

(12) # EUROPÄISCHE PATENTANMELDUNG

(21) Anmeldenummer: **86102995.7**

(22) Anmeldetag: **06.03.86**

(51) Int. Cl.⁴: **H 01 B 17/32**
**H 01 B 19/00, H 01 B 19/04**

(30) Priorität: **04.04.85 CH 1473/85**

(43) Veröffentlichungstag der Anmeldung:
**08.10.86 Patentblatt 86/41**

(84) Benannte Vertragsstaaten:
**CH DE FR GB LI SE**

(71) Anmelder: **BBC Aktiengesellschaft Brown, Boveri & Cie.**
**Haselstrasse**
**CH-5401 Baden(CH)**

(72) Erfinder: **Beer, Hans-Rudolf, Dr.**
**Zürichstrasse 244**
**CH-8122 Binz(CH)**

(72) Erfinder: **Britsch, Helmut**
**Schrannstrasse 9**
**CH-5107 Schinznach-Dorf(CH)**

(72) Erfinder: **Jülke, Elias, Dr.**
**Kornstrasse 5**
**CH-5430 Wettingen(CH)**

(72) Erfinder: **Kaiser, Tony, Dr.**
**Lägernweg 4**
**CH-8107 Buchs(CH)**

(54) Verfahren zur Herabsetzung der Wasserdampfdiffusion in einem aus mehreren Schichten bestehenden Kunststoff-Verbundisolator.

(57) Verfahren zur Herabsetzung der Wasserdampfdiffusion in einem aus mehreren Schichten bestehenden Kunststoff-Verbundisolator durch Einbau von mindestens einer glimmer-haltigen Schicht (2, 3) als Diffusionssperre in Form einer Oberflächen- oder Zwischenschicht auf wenigstens einem, den Verbundisolator konstituierenden Kunststoffkörpern (1). Bevorzugte Ausführung mit Schirmkörper (4) als Mantel für Freiluftaufstellung.

FIG.4

0196493

38/85

4.4.85

- 1 -                    Br/dh

## Verfahren zur Herabsetzung der Wasserdampfdiffusion in einem aus mehreren Schichten bestehenden Kunststoff-Verbundisolator

Die Erfindung geht aus von einem Verfahren zur Herabsetzung der Wasserdampfdiffusion in einem Kunststoff-Verbundisolator nach der Gattung des Oberbegriffs des Anspruchs 1.

Bei Wandlern, Ueberspannungsableitern und Schaltern, insbesondere für Freiluftaufstellung, werden im allgemeinen mantel- und überlaufartige Prozellankörper verwendet. Da Porzellan teuer ist und Körper grosser Abmessungen schwierig oder überhaupt nicht mehr herstellbar sind, wird versucht, diesen Werkstoff durch Kunststoffe zu ersetzen. Dies führte zum Kunststoff-Verbundisolator. Als Beispiel kann der glasfaserverstärkte Kunststoffisolator genannt werden. Derartige Isolatoren haben jedoch eine relativ hohe Wasserdampfdurchlässigkeit, was vorzeitig zu elektrischen Durchschlägen führen kann. Der hineindiffundierte Wasserdampf kann zwar durch geeignete Absorptionsmittel gebunden werden, doch ist deren Aufnahmefähigkeit beschränkt.

Es ist daher notwendig, bei Kunststoffisolatoren Wasserdampf-Diffusionssperren einzubauen. Wegen der immer noch vorhandenen Wasserdampfdurchlässigkeit praktisch aller Kunststoffe, scheiden die letzteren dafür aus. Auch Metallfolien können wegen ihrer elektrischen Leitfähigkeit nicht verwendet werden.

Es besteht daher ein grosses Bedürfnis nach Verbesserung der herkömmlichen Werkstoffkombinationen für derartige Isolierkörper.

Der Erfindung liegt die Aufgabe zugrunde, ein Verfahren zur möglichst wirksamen Herabsetzung der Wasserdampfdiffusion in einem aus mehreren Schichten bestehenden, aus Kunststoffen und Bewehrungsmitteln aufgebauten Verbundisolator, vorzugsweise für Freiluftaufstellung, anzugeben, welches einfach auszuführen ist und zu einer wirtschaftlichen Fertigung geeignet ist.

Diese Aufgabe wird durch die im kennzeichnenden Teil des Anspruchs 1 angegebenen Merkmale gelöst.

Die Erfindung wird anhand der nachfolgenden, durch Figuren näher erläuterten Ausführungsbeispiele beschrieben.

Dabei zeigt:

Fig. 1    einen schematischen Längsschnitt durch einen Kunststoff-Verbundisolator mit innenliegender Diffusionssperre,

Fig. 2    einen schematischen Längsschnitt durch einen Kunststoff-Verbundisolator mit aussenliegender Diffusionssperre,

Fig. 3  einen schematischen Längsschnitt durch einen
Kunststoff-Verbundisolator mit innen- und aussenliegender Diffusionssperre,

Fig. 4  einen schematischen Längsschnitt durch einen
Kunststoff-Verbundisolator mit innenliegender
Diffusionssperre und aussenliegendem Schirmkörper für Freiluftaufstellung.

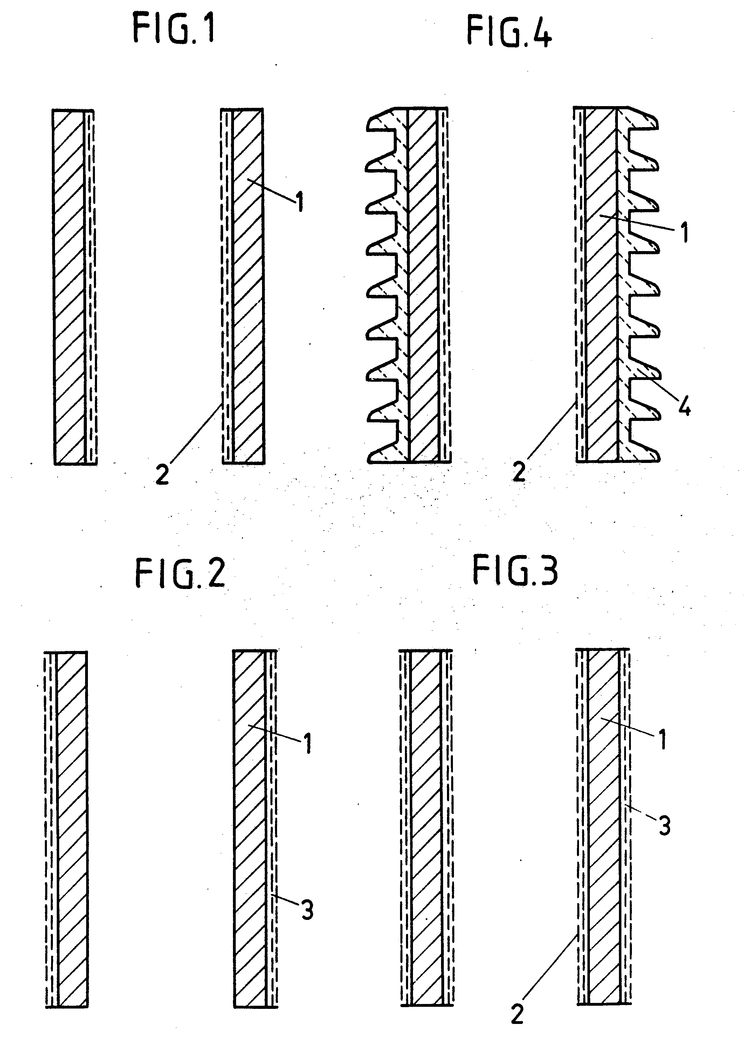

In Fig. 1 ist ein schematischer Längsschnitt durch einen
Kunststoff-Verbundisolator mit innenliegender Diffusionssperre dargestellt. Der Isolator besteht im wesentlichen aus einem - im vorliegenden Fall hohlzylindrischen -
glasfaserverstärktem Kunststoffkörper 1 (Rohr) mit einer
innenliegenden glimmerhaltigen Schicht 2, welche als
Wasserdampf-Diffusionssperre wirkt.

Fig 2 stellt einen schematischen Längsschnitt durch einen
Kunststoff-Verbundisolator mit aussenliegender Diffusionssperre dar. Der rohrförmige Kunststoffkörper 1 trägt
eine aussenliegende glimmerhaltige Schicht 3.

In Fig. 3 wird ein Längsschnitt (schematisch) durch einen
Kunststoff-Verbundisolator mit innen- und aussenliegender
Diffusionssperre gezeigt. Der Aufbau ist sozusagen eine
Kombination von Fig. 1 und Fig. 2. Der Kunststoffkörper 1
trägt sowohl eine innen- (2) wie eine aussenliegende
(3) glimmerhaltige Schicht; weist also eine doppelte
Diffusionssperre auf.

Fig. 4 stellt einen schematischen Längsschnitt durch
einen Kunststoff-Verbundisolator mit innenliegender Diffusionssperre und aussenliegendem Schirmkörper für Freiluftaufstellung dar. Der Aufbau lehnt sich im wesent-

- 4 -

0196493
58785

lichen Fig. 1 an. Der glasfaserverstärkte Kunststoffkörper 1 ist mit einer innenliegenden glimmerhaltigen Schicht 2 und einem aussenliegenden Schirmkörper 4 versehen, welcher als gerippter Mantel den Isolator für Freiluftaufstellung geeignet macht.

Ausführungsbeispiel 1:

Siehe Fig. 1!
Ein Kunststoff-Verbundisolator mit Diffusionssperre wurde nach dem sogenannten Nasswickelverfahren hergestellt.

Auf einen glatten hohlzylindrischen, mittels Innenheizung auf eine Temperatur im Bereich von 40 - 60°C erwärmten ~~glatten~~, mit einem Trennmittel als Oberflächenschicht versehenen Wickeldorn aus Stahl von 300 mm Durchmesser wurde zunächst ein vorimprägniertes Glimmer-Glasgewebeband (Romicafil 249 der Fa. Micafil, Zürich) aufgewickelt. Es wurden 2 gegenläufige Lagen, 1/2 überlappt hergestellt. Die totale radiale Dicke dieser innenliegenden glimmerhaltigen Schicht 2 betrug 0,6 mm. Auf diese hohlzylindrische Schicht 2 wurde ein glasfaserverstärkter Kunststoffkörper 1 durch Aufwickeln aufgebracht. Zu diesem Zweck wurde ein Strang aus parallelen Glasfasern (Roving 2400 Tex, Typ OC-859 der Fa. Owens Corning) mit leichter Vorspannung zwecks Imprägnierung durch ein Tränkbad aus einem Kunstharz gezogen. Das Tränkbad hatte folgende Zusammensetzung:

100 Gewichtsteile Epoxydharz (Araldit LY556 der Fa. Ciba-Geigy, Basel)

80 Gewichtsteile Härter auf Basis Carbonsäureanhydrid (Härter HT 907 der Fa. Ciba-Geigy, Basel)

2 Gewichtsteile Beschleuniger (DY 063 der Fa. Ciba-
Geigy)

Das Tränkbad wurde mittels Infrarot-Strahler auf einer
Temperatur zwischen 40 und 60°C gehalten. Der Ausgang
des Bades war mit einem Abstreifer zur Entfernung des
überflüssigen Harzes vom Strang ausgerüstet. Die Wickelgeschwindigkeit betrug ca. 15 m/min. Allfällig sich in
der Einlaufzone des Bandes bildende Luftblasen können
z.B. mittels Heissluftstrahl zum Platzen gebracht und
unschädlich gemacht werden. Es ist darauf zu achten,
dass bei der Herstellung des Kunststoffkörpers beim Aufwickeln Lufteinschlüsse jedwelcher Art vermieden werden.
Nach Erreichen einer radialen Wanddicke des Kunststoffkörpers von 3,5 mm wurde der Wickeldorn auf eine zwischen
110 und 120°C liegende Temperatur gebracht, wobei der
Kunststoffkörper von innen heraus angehärtet wurde. Nach
diesem Anhärten wurde der Kunststoffkörper 1 samt glimmerhaltiger Schicht 2 mittels hydraulischer Presse vom Wickeldorn abgestreift und anschliessend während 2 h bei einer
Temperatur von 140°C vollständig ausgehärtet.

Ausführungsbeispiel 2:

Siehe Fig. 1!
Nach dem unter Beispiel 1 angegebenen Verfahren wurde
ein Kunststoff-Verbundisolator hergestellt, wobei jedoch zum Aufbau der innenliegenden glimmerhaltigen Schicht
2 ein vorimprägniertes Polyestervlies/Glimmerband (Romicapreg 292 der Fa. Micafil) verwendet wurde. Die Dicke
der Schicht 2 betrug 0,8 mm. Alle übrigen Verfahrensschritte waren identisch wie unter Beispiel 1.

Ausführungsbeispiel 3:

Siehe Fig. 1!

Nach dem unter Beispiel 1 angegebenen Verfahren wurde
ein Kunststoff-Verbundisolator hergestellt, wobei die
innenliegende glimmerhaltige Schicht 2 aus einem vorimprägnierten, aus Glasgewebe, Glimmer und einer Kunststoff-Folie bestehenden Band aufgebaut wurde. Die darauffolgenden Verfahrensschritte waren die gleichen wie unter
Beispiel 1 angegeben.

Es soll noch darauf aufmerksam gemacht werden, dass hierzu auch ein Band mit dem Aufbau Glasgewebe/Glimmer/Glasgewebe, wie es von der Fa. Midwest Mica & Insulation Co.,
Cleveland angeboten wird, verwendet werden kann.

Ausführungsbeispiel 4:

Siehe Fig. 2!

Ein Kunststoff-Verbundisolator mit Diffusionssperre wurde
nach dem sogenannten Trockenwickelverfahren hergestellt.

Auf einen glatten, mit einer Trennfolie abgedeckten Wikkeldorn ähnlich Beispiel 1 wurde zunächst ein Glasband
trocken, ohne Harzträgung bis zu einer radialen Dicke
von 3,5 mm aufgewickelt. Darauf wurden 2 Lagen 1/2 überlappt eines nichtimprägnierten, beidseitig mit einem
Kunststoffvlies abgedeckten, Glimmerplättchen enthaltenden Bandes (Typ V 160 von Isovolta) trocken aufgewickelt.
Das Ganze wurde nun in einen vakuumdichten Behälter gebracht und letzterer auf einen Restdruck von weniger
als 700 Pa evakuiert. Dann wurde eine Kunstharzmischung
der Zusammensetzung gemäss Beispiel 1 in den trockenen
Wickelkörper eingezogen und der Behälter daraufhin unter
einen Ueberdruck von ca. 0,1 MPa gesetzt. Das Gelieren und
Härten des Kunstharzes nach der Imprägnierung erfolgte analog den im Beispiel 1 angegebenen Verfahrensschritten.

Für den Aufbau der aussenliegenden glimmerhaltigen Schicht 3 kann auch ein beidseitig mit einem Glasband abgedecktes, Glimmerplättchen enthaltendes Band benutzt werden. Eine weitere Variante besteht in der Verwendung eines beidseitig mit Glimmer bedecktes, 10 - 15 % Bindemittel enthaltendes Glasband der Fa. Midwest Mica & Insulation Co., Cleveland.

## Ausführungsbeispiel 5:

Siehe Fig. 3!
Nach dem unter Beispiel 4 angegebenen Verfahren wurde ein Kunststoff-Verbundisolator gemäss Aufbau Fig. 3 hergestellt, d.h. sowohl mit innenliegender (2) wie mit aussenliegender (3) glimmerhaltigen Schicht. Zum Aufbau dieser Schichten 2 und 3 wurde das oben genannte Glasband mit beidseitigen Glimmerschichten der Fa. Midwest Mica & Insulation Co. benutzt.

## Ausführungsbeispiel 6:

Siehe Fig. 3!
Ein Kunststoff-Verbundisolator mit doppelter Diffusionssperre wurde nach dem Vakuum-Druck-Imprägnierverfahren hergestellt.

Hierzu wurde eine aus einem Kern- und einem Mantelrohr bestehende Giessform verwendet. Zunächst wurde eine glimmerhaltige Schicht 2 gemäss Beispiel 4 auf das Kernrohr aufgewickelt. Dann folgte unter leichter Vorspannung das faltenfreie Aufwickeln eines Glasgewebes, und zum Schluss nochmals eine glimmerhaltige Schicht 3. Das fertig bewickelte Kernrohr wurde hierauf in das Mantelrohr geschoben und wie unter Beispiel 4 angegeben unter Anwendung von Vakuum mit darauffolgendem Druck mit Kunstharz imprägniert.

Ausführungsbeispiel 7:

Siehe Fig. 4!

Ein Kunststoff-Verbundisolator mit Diffusionssperre und
Mantel für Freiluftaufstellung wurde wie folgt hergestellt:

Auf die Innenfläche eines glasfaserverstärkten hohlzylindrischen Kunststoffkörpers 1 wurde eine ca. 2 mm dicke
(radial gemessen) mit Glimmerplättchen gefüllte Kunststoffmasse auf Epoxydbasis mit Haftvermittler auf Silanbasis eingeschleudert. Die Kunststoffmasse dieser Schicht
2 wurde in bekannter Weise ausgehärtet. Zum Schluss wurde
auf den Kunststoffkörper 1 ein Mantel für Freiluftaufstellung in Form eines Schirmkörpers 4 durch Umgiessen
mittels eines Silikon-Elastomers aufgebracht.

Statt des Glimmers kann die für die Diffusionssperre
verwendete gefüllte Kunststoffmasse auch ~~Glimmerx~~ Eisenglimmer und/oder Glasschuppen enthalten.

Die Erfindung ist nicht auf die Ausführungsbeispiele
beschränkt.

Es versteht sich von selbst, dass der Aufbau des Verbundisolators auch mehrere Kunststoffkörper 1 umfassen kann.
Desgleichen sind Kombinationen der in den Figuren 1 bis 4
angegebenen schematischen Varianten möglich. Das Aufbringen des den äusseren Mantel für Freiluftaufstellung
bildenden Schirmkörpers 4 kann grundsätzlich durch Umgiessen, Verkleben, Aufwickeln auf die als Diffusionssperre wirkende glimmerhaltige Schicht 3 oder auf den

0196493

Kunststoffkörper 1 erfolgen. Statt Bänder als Träger
der glimmerhaltigen Schichten 2, 3 können auch breite
Bahnen von geeigneten Geweben sowie Bahnen aus trägerlosen Glimmerpapieren verwendet werden.

Als Imprägnier- und Beschichtungsharze können, je nach
Anforderungen auch andere als die in den Beispielen spezifizierten Zusammensetzungen von Kunststoffen, insbesondere auf Epoxydbasis, ferner ungesättigte Polyesterharze,
Vinylesterharze, Polyurethane etc. verwendet werden.

Die neuen Kunststoff-Verbundisolatoren zeichnen sich
durch stark herabgesetzte Wasserdampfdiffusion aus, was
sie besonders zur Aufstellung unter erschwerenden Bedingungen geeignet macht. Insbesondere kommt dabei die Aufstellung in feuchten Räumen, unter tropischen Verhältnissen und die Freiluftaufstellung in Betracht.

P a t e n t a n s p r ü c h e

1. Verfahren zur Herabsetzung der Wasserdampfdiffusion in einem aus mehreren Schichten bestehenden Kunststoff-Verbundisolator, dadurch gekennzeichnet, dass bei der Herstellung mindestens eine glimmerhaltige Oberflächen- oder Zwischenschicht (2, 3) als Diffusionssperre auf mindestens einen von mehreren, den Verbundisolator konstituierenden Körpern (1) aufgebracht wird.

2. Verfahren nach Anspruch 1, dadurch gekennzeichnet, dass eine glimmerhaltige Schicht (2) als Diffusionssperre auf die innerste Begrenzungsfläche des Verbundisolators aufgebracht wird.

3. Verfahren nach Anspruch 1, dadurch gekennzeichnet, dass eine glimmerhaltige Schicht (3) als Diffusionssperre auf die äussere Begrenzungsfläche des inneren, den Kern bildenden Körpers (1) des Verbundisolators aufgebracht wird und der äusserste, den Mantel bildende Körper (4) des Verbundisolators durch Umgiessen, Verkleben, Aufwickeln auf die durch die Diffusionssperre gebildete Zwischenschicht (3) aufgebracht wird.

4. Verfahren nach Anspruch 1, dadurch gekennzeichnet, dass eine glimmerhaltige Schicht (2, 3) als Diffusionssperre sowohl auf die innere, als auch auf die äussere Begrenzungsfläche des Verbundisolators aufgebracht wird.

5. Verfahren nach Anspruch 1, dadurch gekennzeichnet, dass zur Herstellung der Diffusionssperre ein vorimprägniertes Glimmer-Glasgewebeband oder ein vorimprägniertes Polyestervlies/Glimmerband benutzt
wird.

6. Verfahren nach Anspruch 1, dadurch gekennzeichnet,
dass zur Herstellung der Diffusionssperre ein vorimprägniertes, aus Glasgewebe, Glimmer und einer Kunststoff-Folie bestehendes Band benutzt wird.

7. Verfahren nach Anspruch 1, dadurch gekennzeichnet,
dass zur Herstellung der Diffusionssperre ein nichtimprägniertes, beidseitig mit einem Kunststoff-Vlies
oder einem Glasband abgedecktes, Glimmerplättchen
enthaltendes Band benutzt wird.

8. Verfahren nach Anspruch 1, dadurch gekennzeichnet,
dass zur Herstellung der Diffusionssperre ein beidseitig mit Glimmer bedecktes Glasband benutzt wird.

9. Verfahren nach Anspruch 1, dadurch gekennzeichnet,
dass die als Diffusionssperre wirkende Schicht (2, 3)
durch Einschleudern eines mit Glimmer, Eisenglimmer
und/oder Glasschuppen gefüllten Kunstharzes auf mindestens einen der Körper des Kunststoff-Verbundisolators hergestellt wird.

FIG.1

FIG.4

FIG.2

FIG.3